# EUROPEAN PATENT APPLICATION

(11) **EP 4 585 345 A1**
(43) Date of publication of application: **16.07.2025**
(21) Application number: 25150163.1
(22) Date of filing: 03.01.2025
(51) Int. Cl.: B23K 9/10, B60L 1/00, B60L 55/00

(54) **SYSTEMS AND METHODS FOR VEHICLE-TO-WELDER ELECTRIC VEHICLE CHARGER INTERFACES**

(30) Priority: 05.01.2024 US 202463617920 P; 20.12.2024 US 202418989046
(71) Applicant: Illinois Tool Works Inc., Glenview IL 60025 (US)
(72) Inventor: DICKINSON, Darin Roy, Glenview, 60025 (US)
(74) Representative: HGF

(57) **Abstract**

Disclosed example welding power systems and methods are configured to receive input power from an energy system of electric vehicles (EV). In particular, the welding power system and/or the EV energy system can include adapters, power conversion circuitry, communications interfaces, and/or processing circuitry to facilitate power delivery and condition to the welding power system from the EV energy system. In some examples, the input power from the EV energy system is used to power welding operations directly. In some examples, the input power from the EV energy system is used to charge internal batteries of the welding power system, from which welding tools can draw power, while the welding power supply is connected to the EV Energy system and/or when the welding power supply is disconnected from the EV Energy system.

## Description

### CROSS REFERENCE TO RELATED APPLICATIONS

This application is a Non-Provisional Patent Application claiming priority to U.S. Provisional Patent Application No. 63/617,920 entitled "Systems And Methods For Vehicle-To-Welder Electric Vehicle Charger Interfaces" filed January 5, 2024, which is herein incorporated by reference in its entirety.

### BACKGROUND

A common metal welding technique employs the heat generated by electrical arcing to transition a work piece to a molten state, to facilitate a welding process. Conventional welding systems have drawn power from mains, as a large amount of power is needed for various welding operations. Recently, mobile welding has become commonplace, as welding systems draw power from a mobile, engine driven power source. Engine driven power sources can be provided as standalone system (e.g., fully contained), or as a vehicle mounted system. Systems and methods that fully utilize power systems available from a variety of vehicle platforms would be advantageous.

Limitations and disadvantages of conventional and traditional approaches will become apparent to one of skill in the art, through comparison of such systems with the present disclosure as set forth in the remainder of the present application with reference to the drawings.

### SUMMARY

Welding power systems configured to receive input power from an energy system of electric vehicles are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIGS. 1A and 1B illustrate example welding systems configured to receive power from an energy system of an electric vehicle, in accordance with aspects of this disclosure.
FIG. 2 is a schematic diagram of an example welding system configured to receive power from an energy system of an electric vehicle illustrated in FIG. 1A, in accordance with aspects of this disclosure.
FIG. 3 is a schematic diagram of an example welding system configured to receive power from an energy system of an electric vehicle illustrated in FIG. 1B, in accordance with aspects of this disclosure.
FIG. 4 is a schematic diagram of an additional or alternative example welding system configured to receive power from and provide power to an energy system of an electric vehicle, in accordance with aspects of this disclosure.

The figures are not necessarily to scale. Where appropriate, similar or identical reference numbers are used to refer to similar or identical components.

### DETAILED DESCRIPTION

Disclosed are example welding power systems and methods to receive input power from an energy system of electric vehicles (EV). In particular, the welding power system and/or the EV energy system can include adapters, power conversion circuitry, communications interfaces, and/or processing circuitry to facilitate power delivery and condition to the welding power system from the EV energy system. In some examples, the input power from the EV energy system is used to power welding operations directly. In some examples, the input power from the EV energy system is used to charge internal batteries of the welding power system, from which welding tools can draw power, while the welding power supply is connected to the EV Energy system and/or when the welding power supply is disconnected from the EV Energy system.

Vehicle mounted welding equipment is widely used, allowing operators to bring high-power welding applications to remote work environments. For the most part, such vehicle mounted systems are module engine-driven equipment. This comes at a cost, as the vehicle is carrying an engine-generator and associated equipment, which takes up space on the vehicle, adds weight thereby reducing payload capacity, lowers the portability of the vehicle itself, adds material cost, increases maintenance to the vehicle, increases needed fuel to operate the vehicle, and/or adds to emissions of fumes into the environment. A non-engine driven welder could be transported to remote work locations, but power would still be required for comprehensive welding operations. Often this would also require an electrician to wire in equipment at each worksite.

Recently, limited range fleet electric vehicles have been discussed for utilities, maintenance, grounds upkeep, facilities, and mining applications; in other words, beyond basic consumer applications. In these applications, traction motors have power demands that are equivalent to or far greater than what is needed for comprehensive welding operations. In other words, the power density of the on board batteries of such vehicles may be sufficient to provide power for a welding power supply (e.g., as an "EV power take off').

There also may be a strong demand for EV charging technology that enables bidirectional power delivery. For example, standards are being developed that enable the use of EV batteries as a power source for external loads (e.g., welders, tools, etc.). This may be referred to as Vehicle-to-Grid (V2G), as the intended application is to use the EV's onboard battery to buffer and/or stabilize electrical distribution when connected to power source (e.g., mains power/the grid). This technology could also be used to power "plug and play" welding power supplies, thereby leveraging battery charger and/or power delivery communication, interface, and/or delivery protocols.

Other useful protocols, such as vehicle-to-everything (V2X) is a protocol that can be configured, by modification of software and/or hardware components, to deliver power to a variety of loads. The use cases are potentially vast, but include vehicle-to-home (V2H), vehicle-to-building (V2B), vehicle-to-infrastructure (V2I), vehicle-to-network (V2N), vehicle-to-vehicle (V2V), vehicle-to-device (V2D), and vehicle-to-grid (V2G), as a list of non-limiting examples.

In some examples, the welding power system uses an inverter power supply employing V2G and/or V2X technology to directly interface with the (potentially bidirectional) onboard EV energy and/or charging system to use the EV's energy storage system as a power source. Thus, the disclosed welding power system enjoys the advantages of lithium battery technology without the increased complexity and cost of incorporating such batteries into a welder.

Advantageously, a vehicle mounted welding power system, configured to draw power from a high power density EV energy system, would be far lighter than a conventional engine-driven welder, and would eliminate the need for fuel. Further, emissions would be eliminated, mitigating environmental concerns.

In disclosed examples, a welding power system includes a power interface configured to receive input power from an electric vehicle battery according to a vehicle-to-grid or a vehicle-to-everything protocol; power conversion circuitry to condition the input power to output power for one or more welding devices; and control circuitry configured to: receive electric vehicle battery power data; compare the electric vehicle battery power data to one or more output power requirements of the one or more welding devices; and control the power conversion circuitry to condition the output power to the one or more welding devices in response to the electric vehicle battery power data meeting or exceeding the output power requirements of the one or more welding devices.

In some examples, the control circuitry comprises an interface circuit configured to receive and transmit data and power to and from the electric vehicle battery or a control circuit of an electric vehicle in accordance with the vehicle-to-grid or the vehicle-to-everything protocol.

In some examples, the system further includes a welding energy storage device, the power conversion circuitry configured to condition the input power to charge the welding energy storage device.

In examples, the interface circuit is further configured to transmit power from the welding energy storage device to charge the electric vehicle battery or to power one or more electric vehicle systems.

In examples, the interface circuit is configured to receive and transmit data to and from the electric vehicle via wired or wireless communications.

In some examples, the welding power system is electrically connected to the electric vehicle via a power cable comprising an electric vehicle receptacle adapter.

In examples, the electric vehicle receptacle adapter comprises a J-1772 plug.

In some examples, the power conversion circuitry comprises one or more switched-mode power supplies.

In examples, the welding power system is incorporated in the electric vehicle.

In some examples, the one or more welding devices comprises one or more of a welding torch, a plasma cutting torch, a wire feeder, or a battery charger.

In some examples, the one or more output power requirements of the one or more welding devices correspond to one or more of a predetermined threshold current magnitude or a predetermined threshold power magnitude based in part on a type of the one or more welding devices.

In examples, the control circuitry is further configured to determine the predetermined threshold current or the predetermined threshold power magnitudes as a percentage above or below the one or more supply power levels, or a magnitude above or below the one or more supply power levels.

In some disclosed examples, the welding power system includes a power interface configured to receive input power from and deliver output power to an electric vehicle battery; power conversion circuitry to condition the input power to output power for one or more welding devices; and control circuitry configured to: receive electric vehicle battery power data; compare the electric vehicle battery power data to one or more output power requirements of the one or more welding devices; and control the power conversion circuitry to condition the output power to the one or more welding devices in response to the electric vehicle battery power data meeting or exceeding the output power requirements of the one or more welding devices.

In some examples, the power interface is configured to receive input power from and deliver output power to an electric vehicle battery according to a vehicle-to-grid or a vehicle-to-everything protocol.

In some examples, the power conversion circuitry is configured to condition DC power from the electric vehicle battery to DC welding power.

In some examples, the power conversion circuitry is configured to condition DC power from the electric vehicle battery to DC power to charge a welding battery.

In some examples, the system further includes a welding battery, wherein the power conversion circuitry is configured to condition DC power from the welding battery to DC power for the electric vehicle battery.

In examples, the power conversion circuitry comprises one or more boost/buck converters.

In examples, the welding power system is incorporated in an electric vehicle housing the electric vehicle battery.

In some examples, the welding power system is remote from an electric vehicle housing the electric vehicle battery, the welding power system further comprising an adapter to allow a weld cable to connect the welding power system to the electrical vehicle battery.

As used herein, the term "electrical vehicle" or "EV" is defined as a vehicle that can be powered by an electric motor that draws electricity from an energy source/battery, and can be charged from an external power source. An EV can include a vehicle powered by an electric motor drawing electricity from a battery (e.g., an all-electric type vehicle), and a vehicle powered by an electric motor that draws electricity from a battery and/or an internal combustion engine (e.g., plug-in hybrid type electric vehicle).

As used herein, the terms "welding-type system" and/or "welding system," includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the terms "welding-type power" and/or "welding power" refer to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), spray, short circuit, and/or any other type of welding process.

As used herein, the term "welding program" includes at least a set of welding parameters for controlling a weld. A welding program may further include other software, algorithms, processes, or other logic to control one or more welding-type devices to perform a weld.

As used herein, the terms "welding parameter" includes one or more of voltage, current, power, wire feed speed, gas flow rate, pulse rate, workpiece thickness, workpiece material type, electrode type, welding process, travel speed, arc length, or joint type, as a list of non-limiting examples.

The term "power" is used throughout this specification for convenience, but also includes related measures such as energy, current, voltage, resistance, conductance, and enthalpy. For example, controlling "power" may involve controlling voltage, current, energy, resistance, conductance, and/or enthalpy, and/or controlling based on "power" may involve controlling based on voltage, current, energy, resistance, conductance, and/or enthalpy.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include safety circuitry, output selection circuitry, measurement and/or control circuitry, and/or any other circuits to provide appropriate features.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magnetooptical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor 130.

As used herein, the terms "first" and "second" may be used to enumerate different components or elements of the same type, and do not necessarily imply any particular order.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

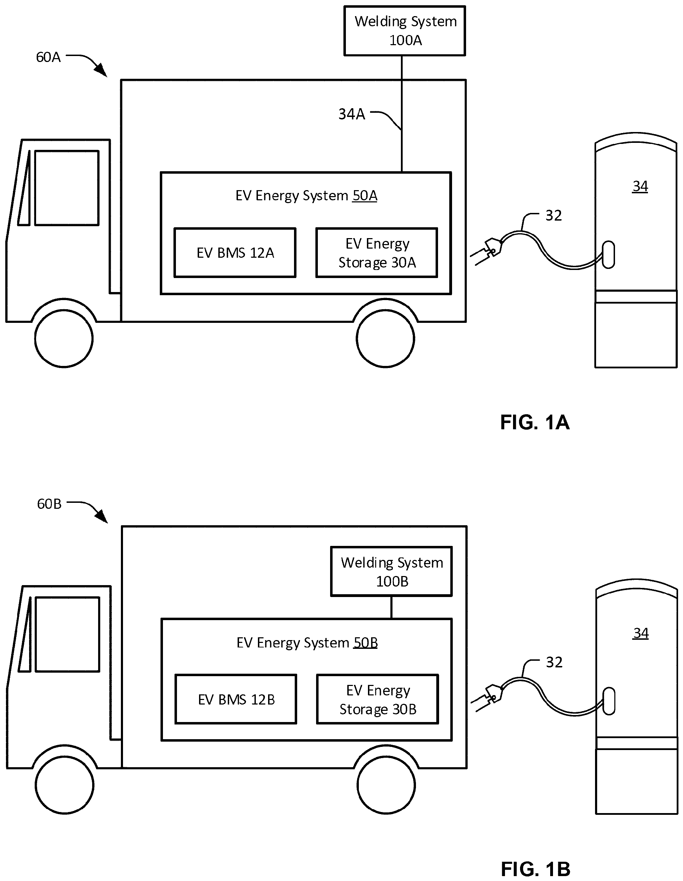

Turning now to the figures, FIGS. 1A and 1B illustrate example welding systems configured to receive power from an energy system of an electric vehicle. FIG. 1A provides an electric vehicle (EV), such as a utility truck, work truck, and/or service vehicle equipped with an EV energy system 50A. The energy system 50A includes at least an EV battery management system (BMS) 12A and an EV energy storage device 30A (e.g., a rechargeable battery). The EV energy system 50A is configured to recharge the EV energy storage device 30A from a charging station 34A via cable 32A.

The EV energy system 50A is configured to receive a welding system 100A (such as a 300A multi-process DC welding power supply, described in greater detail below). The EV energy system 50A may provide a dedicated receptacle to plug in the welding system 100A via cable 34A, and/or may be configured to receive an adapter that allows the cable 34A to plug into the EV energy system 50A. For example, the adapter may allow cable 34A to be plugged into the same receptacle as cable 32A (e.g., when the EV energy system 50A is configured for bidirectional power). One or both of the EV energy system 50A and the welding system may employ universal charging standards to provide and/or receive power.

FIG. 1B provides an alternative EV 60B, such that the welding system 100B is incorporated with the vehicle. Thus, the welding system 100B may be directly connected to EV energy system 50B.

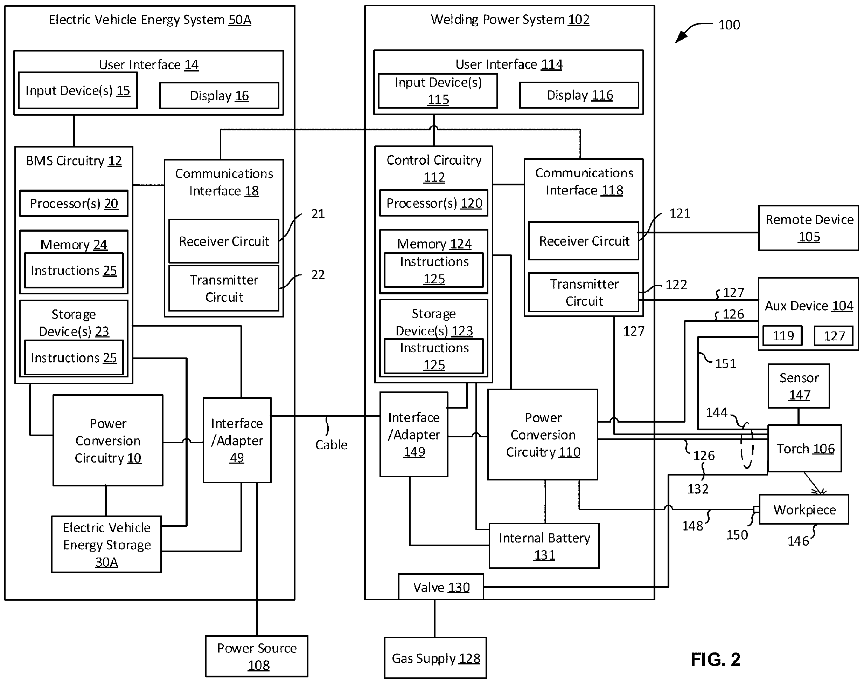

FIG. 2 is a schematic diagram of an example welding system configured to receive power from an energy system 50A of the EV 60A illustrated in FIG. 1A. The energy system 50A can be configured for direct operator control and/or automatic control in response to predetermined conditions being met. For example, an interface 14 can be provided to allow an operator to view, select, and/or adjust one or more power parameters associated with the EV energy system 50A. For instance, the interface 14 can indicated the amount of battery power remaining in the energy storage device 30A, view power available from a power source 108 (e.g., charging station 34), view power demand from a load (e.g., welding power system 102 and/or power source 108), and/or regulate power available to a load). The interface 14 may include one or more input devices 15 (such as a selector switch, knob, touchscreen input).

The energy system 50A includes power conversion circuitry 10, which may include transformers, rectifiers, switches (a switched-mode power supply), and so forth, capable of converting input power from the power source 108 to power suitable for charging the energy storage 30A, and/or as output power for the welding system 102 (e.g., to support welding processes).

In some examples, the power conversion circuitry 10 can convert input power (e.g., the primary power source 108) and/or power from energy storage device 30A into welding-type power, such weld current/voltage/power can be delivered directly to a welding tool (e.g., torch 106, auxiliary device 104, etc.) without the use of a welding power system 102. Any suitable power conversion system or mechanism may be employed by the power system 102 to generate and supply both weld and auxiliary power.

The energy system 50A includes battery management system (BMS) circuitry 12 to control the operation of the energy system 50A. For example, the control circuitry 12 receives input from the user interface 14 and/or communications interface 18, through which a process, power amount or type may be provided. In some examples, the control circuitry 12 controls welding parameters based on input by the user as well as based on other current operating parameters (e.g., , when the energy system 50A is directly powering a welding tool).

The user interface 114 may include a display 116 for presenting, showing, or indicating, information to an operator, such as displayed for selection, adjustment, etc. The interface circuitry 118 can communicate data with other devices, such as the welding power system 102. For example, in some situations, the interface 18 wirelessly communicates with the welding system 100 (including remote device 105, auxiliary device 104, torch 106, etc.). In some situations, the energy system 50A communicates using a wired connection, such as by using a network interface controller (NIC) to communicate data via a network (e.g., ETHERNET, 10baseT, 10base100, etc.).

The control circuitry 12 includes at least one controller or processor 20 that controls the operations of the energy system 50A. The control circuitry 12 receives and processes multiple inputs associated with the performance and demands of the system 50A. The processor 20 may include one or more microprocessors, such as one or more "general-purpose" microprocessors, one or more special-purpose microprocessors and/or ASICS, and/or any other type of processing device. For example, the processor 20 may include one or more digital signal processors (DSPs).

The example control circuitry 12 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 23 stores data, instructions (e.g., software or firmware to perform welding processes), and/or any other appropriate data. Examples of stored data for a battery management application include a voltage, a current, power, suitable device settings, and so forth.

The memory device 24 may include a volatile memory, such as random access memory (RAM), and/or a nonvolatile memory, such as read-only memory (ROM). The memory device 24 and/or the storage device(s) 23 may store a variety of information and may be used for various purposes. For example, the memory device 24 and/or the storage device(s) 23 may store processor executable instructions 25 (e.g., firmware or software) for the processor 20 to execute. In addition, one or more control regimes for various battery charging and/or discharging processes, along with associated settings and parameters, may be stored in the storage device 23 and/or memory device 24, along with code configured to provide a specific output (e.g., initiate power delivery to the system 102). One or more lists or look up tables (e.g., correlating charging and/or discharging parameters and/or protocols) may be provided in the memory device 24 and/or the storage device(s) 23, and/or via network connections to various databases.

An interface/adapter/input circuit 49 can be arranged to connect to the power source 108, the power system 102, the energy storage device 30A, the power conversion circuitry 10, and/or the other circuit components of energy system 50A. In some examples, the EV power system 50A can draw power from the power source 108 while simultaneously connected to and delivering power to the welding power system 102.

The circuit 49 is further configured to monitor one or more power characteristics, and can include one or more sensors, switches, or other devices configured to monitor, measure, calculate, and/or otherwise identify and/or determine a level, magnitude, and/or component of the supply power. Data corresponding to the monitored power characteristics can be provided from the circuit 49 to one or more circuits within the energy system 50A.

In some examples, the disclosed welding power system can be implemented as a dynamic process, such that the supply current and/or power is monitored constantly, periodically, and/or in response to a command. If the supply power and/or supply power component(s) exceed a desired value and/or or violate an inclusive or exclusive range of values, the welding power system may control one or more welding parameters (e.g., a power output level, a current output level, a voltage output level, etc.) or devices (e.g., a wire feeder, welding torch, etc.) to adjust (e.g., decrease) a supply power demand, thereby ensuring the draw on supply power does not exceed the capabilities of the EV energy system.

In some examples, the communications interface 18 can be communicatively coupled to one or more devices, and may be implemented using serial communications (e.g., full-duplex RS-232 or RS-422, or half-duplex RS-485), network communications (e.g., Ethernet, PROFIBUS, IEEE 802.1X wireless communications, etc.), parallel communications, Bluetooth, near field communications, and/or any other type of communications techniques. The example communications interface 18 includes a receiver circuit 21 and a transmitter circuit 22, and/or a transceiver circuit.

The EV energy system 50A is configured to cooperate with the example welding system 100 and welding-type power supply or power system 102, including auxiliary device 104 (e.g., a wire feeder), and welding tool or torch 106. The welding system 100 powers, controls, and supplies consumables to a welding application for simple and intuitive setup for configurable and/or default settings for the power system 102 and/or wire feeder 104. For example, an interface 114 can be provided to allow an operator to view, select, and/or adjust one or more welding parameters, procedures, or welding parameter values, as a list of non-limiting examples. One or more input devices 115 (such as a selector switch, knob, touchscreen input) are configured to receive an input from the operator relating to a desired change in a value of the one or more welding parameters.

In some examples, the power system 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power system 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 2 includes wire feeder 104 (e.g., for GMAW or FCAW welding), the wire feeder 104 may be replaced by any other type of remote accessory device 105, such as a stick welding and/or TIG welding remote control interface that provides stick and/or TIG welding. In some examples, the auxiliary device 104 is an air compressor, hydraulic pump, battery charger, etc.

The power system 102 receives primary power from the EV energy system 50A (e.g., via interface/adapter/circuit 149), and conditions the power (e.g., via power conversion circuitry 110), and provides an output power to one or more welding devices in accordance with demands of the system 100. The power conversion circuitry 110 may include transformers, rectifiers, switches, and so forth, capable of converting the DC input power (from the EV energy storage device 30) to DC output power as dictated by the demands of the system 100 (e.g., particular welding tools, processes and regimes). The power conversion circuitry 110 converts input power (e.g., from the EV energy system 50A) to welding-type power based on a weld current/voltage/power setpoint and outputs the welding-type power via a weld circuit.

In some examples, the power conversion circuitry 110 is configured to convert the primary power source 108 to both welding-type power and auxiliary power outputs. In some examples, the power system 102 receives a converted auxiliary power output directly from a wall outlet. Any suitable power conversion system or mechanism may be employed by the power system 102 to generate and supply both weld and auxiliary power.

The control circuitry 112 controls the operation of the power system 102. For example, the control circuitry 112 receives input from the user interface 114, through which a user may choose a process, welding parameter type (e.g., voltage, current, power, wire feed speed, gas flow rate, pulse rate, workpiece thickness, workpiece material type, electrode type, welding process, travel speed, arc length, j oint type, particular pulsed or non-pulsed welding regimes, and so forth), and/or input desired parameter values. The user interface 114 may receive inputs using the one or more input devices 115, such as via a keypad, keyboard, physical buttons, knob, a touch screen (e.g., software buttons), a voice activation system, a wireless device, etc. Furthermore, the control circuitry 112 controls operating parameters (e.g., welding parameters) based on input by the user as well as based on other current operating parameters.

The user interface 114 may include a display 116 for presenting, showing, or indicating, information to an operator, such as displayed for selection, adjustment, etc. The control circuitry 112 can determine information regarding the amount of power available from the energy system 50A, as well as load information, and provide this information via user interface 114. The control circuitry 112 may also include interface circuitry for communicating data to other devices in the system 100, such as the wire feeder or other auxiliary device 104, the welding torch 106, etc. For example, in some situations, the power system 102 wirelessly communicates with other welding devices within the welding system 100. Further, in some situations, the power system 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via a communications interface or transceiver 118, as described below.

The control circuitry 112 includes at least one controller or processor 120 that controls the operations of the power system 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

One or more lists or look up tables (e.g., correlating welding parameters and/or processes to supply power/current levels) may be provided in the memory device 124 and/or the storage device(s) 123, and/or via network connections to various databases available to inform decision-making, such as to access preferred welding parameters, to store updated welding parameter settings, etc. For instance, the power available from the energy system 50A may differ from that available from mains power. Thus, welding parameters and/or processes may be presented to via the user interface 114, and/or automatically adopted based on one or more factors (e.g., receipt of an operator input indicating connection with an EV energy system, automatic recognition of the EV energy system, etc.).

The input circuit 149 can be arranged to receive and/or monitor supply power and/or components of the supply power. The input circuit 149 can include one or more sensors, switches, or other devices configured to monitor, measure, calculate, and/or otherwise identify and/or determine a level, magnitude, and/or component of the supply power. Data corresponding to the supply power can be provided from the input circuit 149 to one or more circuits within the welding system 100 (e.g., control circuitry, power conversion circuitry, etc.).

In order to measure the supply current or power, the input circuit 149 can be configured to sample the current (or other component of the supply power) in real-time, in order to calculate or otherwise determine the RMS content of the supply power (e.g., via a Newtonian Method calculation). Additionally or alternatively, software and/or firmware, including an ASIC, can be configured to perform calculations "off-line" such that the control circuitry 112 can poll the input circuit 149 to update the immediate RMS value. In some examples, real-time samples of the supply power can be averaged and a gain factor applied to convert the average content to an RMS value. This method can be effective if the supply current is input as a nearly sinusoidal waveform with little or no harmonic content.

In some examples, the welding power flows from the power conversion circuitry 110 through one or more weld cables 126 to the wire feeder 104 and the welding torch 106. The example weld cable 126 is attachable and detachable from weld studs at each of the power system 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications interface 118 can be communicatively coupled to one or more cables 127 to communicate (e.g., send/receive) data over the weld cable 127. The communications interface 118 may be implemented using serial communications (e.g., full-duplex RS-232 or RS-422, or half-duplex RS-485), network communications (e.g., Ethernet, PROFIBUS, IEEE 802.1X wireless communications, etc.), parallel communications, Bluetooth, near field communications, and/or any other type of communications techniques. In some examples, the communications interface 118 may implement communications over the weld cable 127.

The example communications interface 118 includes a receiver circuit 121 and a transmitter circuit 122, and/or a transceiver circuit. The receiver circuit 121 receives data transmitted by the energy system 50A (via interface 18), and the transmitter circuit 122 transmits data to the energy system 50A to coordinate power delivery. The receiver circuit 121 also receives data transmitted by the wire feeder 104 and/or the welding torch 106 via the weld cable 126 and the transmitter circuit 122 transmits data to the wire feeder 104 and/or the welding torch 106 via the weld cable 126. The communications interface 118 enables remote configuration of the power system 102 from the location of the wire feeder 104 and/or the welding torch 106, and/or command and/or control of the wire feed speed output by the wire feeder 104 and/or the weld power (e.g., voltage, current) output by the power system 102.

The example wire feeder 104 and/or the welding torch 106 may also include a communications transceiver, which may be similar or identical in construction and/or function as the communications interface 118. While communication over a separate communications cable is illustrated in FIG. 1, other communication media, such as wireless media, power line communications, and/or any other communications media, may be used.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable or hose 132 (which in some implementations may be packaged with the welding power output) to the wire feeder 104, which provides the shielding gas to the welding application. In some examples, the welding system 100 does not include the gas supply 128, the valve 130, and/or the hose 132.

In some examples, the wire feeder 104 uses the welding power to power the various components in the wire feeder 104, such as to power a wire feeder controller within the wire feeder 104. As noted above, the weld cable 126 may be configured to provide or supply the welding power. The power system 102 may also communicate with a communications transceiver 119 of the wire feeder 104 using the weld cable 126 and the communications interface 118 disposed within the power system 102. In some examples, the communications transceiver 119 is substantially similar to the communications interface 118 of the power system 102. The wire feeder controller controls the operations of the wire feeder 104. In some examples, the wire feeder 104 uses the wire feeder controller to detect whether the wire feeder 104 is in communication with the power system 102 and to detect a current welding process of the power system 102 if the wire feeder 104 is in communication with the power system 102.

The wire feeder 104 includes components such as a wire drive and/or drive rollers, with the wire feeder configured to receive control signals from the wire feeder controller to activate the wire drive and/or drive rollers. The drive rollers rotate to pull electrode wire 151 off a spool of wire. The wire 151 is provided to the welding application through cable 144. Likewise, the wire feeder 104 may provide the shielding gas from the hose 132 through the cable 144. The electrode wire 151, the shield gas, communications via cable 127, and the power from the weld cable 126 are bundled together in the single cable 144 and/or individually provided to the welding torch 106. In some examples, the power is initiated and stopped by the power system 102. In some examples, one or more sensors 147 are included with or connected to in the wire feeder 104 to monitor one or more welding parameters (e.g., power, voltage, current, wire feed speed, etc.) to inform the controller during the welding process. In some examples, one or more sensors are included in the welding power system 102 and/or the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power system 102 (e.g., to the power conversion circuitry 110) to provide a return path for the weld current (e.g., as part of the weld circuit). The example work cable 148 is attachable and/or detachable from the power system 102 for ease of replacement of the work cable 148. The work cable 148 may be terminated with a clamp 150 (or another power connecting device), which couples the power system 102 to the workpiece 146.

In some examples, one or more sensors 147 are included with or connected to the welding torch 106 to monitor one or more welding parameters (e.g., power, voltage, current, wire feed speed, etc.) to inform the controller 112 during the welding process.

In some examples, the disclosed welding power system can be implemented as a predeterministic process, such that the supply current and/or power levels are predetermined (e.g., provided as an input, based on a listed power rating from a given source, etc.). In response, the welding power system is configured to identify welding parameter limits (e.g., power output levels, current output levels, voltage output levels, etc.) within the capabilities of the power source (e.g., based on the available power output levels of the EV charger and/or battery). Based on the identification, a subset of welding parameters will be presented as available for operation. In some examples, the user interface may display only the subset of available welding parameters (and/or welding processes and/or devices associated with the subset) to an operator for selection, thereby ensuring the draw on supply power does not exceed the capabilities of the EV energy system.

Although FIG. 2 is illustrated as having a user interface (114) incorporated with a particular system, the illustration is exemplary such that one or more of the interfaces disclosed herein as well as additional user interfaces may be incorporated in one or more of the example welding systems disclosed herein. Furthermore, although power system 102 and wire feeder 104 are illustrated as independent units, in some examples, the power supply and wire feeder can be housed in a single enclosure or otherwise integrated. Additionally or alternatively, a single controller, control circuitry, and/or interface can control operation of both the power supply and wire feeder, in some examples.

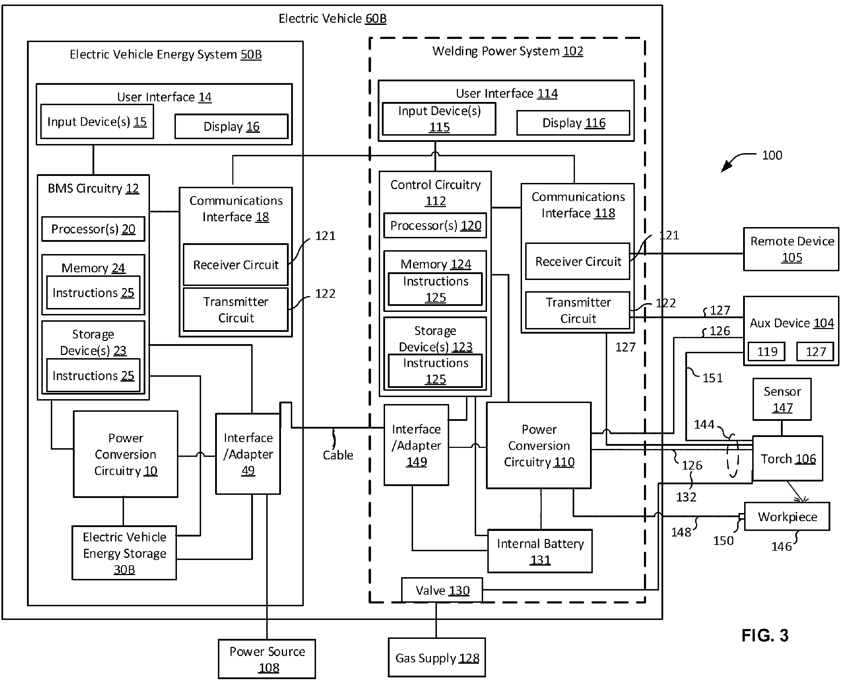

FIG. 3 is a schematic diagram of the example welding system 100 configured to receive power from the energy system 50B of electric vehicle 60B. Where appropriate, similar or identical reference numbers are used to refer to similar or identical components.

As shown, some components of the welding system 100 are incorporated within the electric vehicle 60B. This can include incorporation into the chassis of the vehicle, a workbox mounted to the vehicle, and/or other suitable method to securely and/or removably mount the components to the vehicle 60B. As shown, the welding power system 102 is mounted to the vehicle 60B, while one or more outlets are accessible to a user. For instance, the one or more outlets can receptacles for auxiliary devices, gas outlets, welding studs, welding cable outlet, work cable access, and/or access to the user interface, as a list of non-limiting examples.

In some examples, one or more components of the welding power system 102 (e.g., an interface, power conversion circuitry, control circuitry, receptacles, welding studs, etc.) are incorporated with the EV energy system 50B.

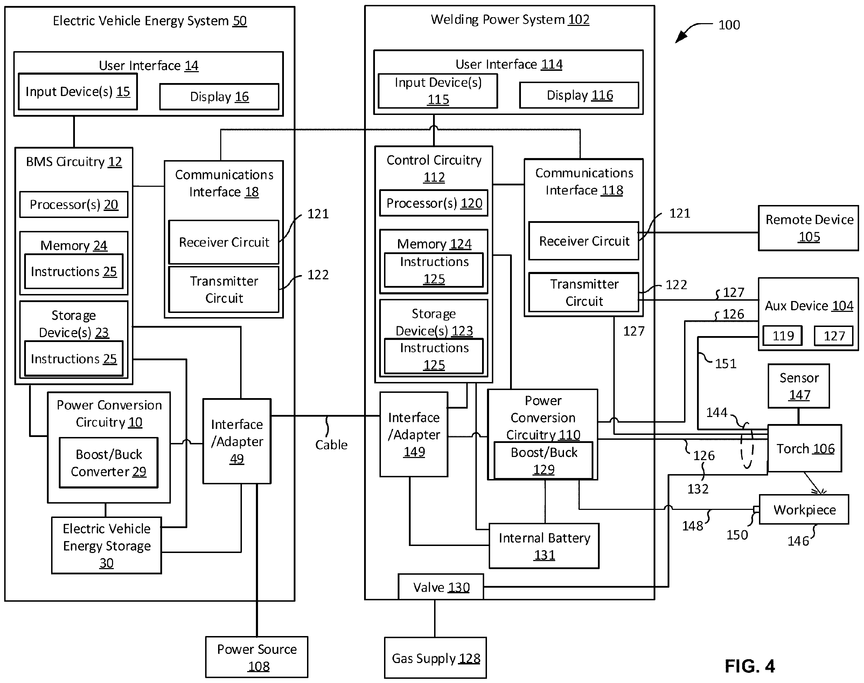

FIG. 4 is a schematic diagram of an additional or alternative example welding system 100 configured to receive power from and provide power to an energy system 50 (e.g., energy system 50A, 50B) of an electric vehicle 60 (e.g., electric vehicle 60A, 60B). Where appropriate, similar or identical reference numbers are used to refer to similar or identical components.

As shown in FIG. 4, the power conversion circuitry can additionally include circuitry to enable bidirectional power transfer. In particular, power conversion circuitry 10 includes an example boost/buck converter 29, to additionally convert power from the welding power system 102 to charge the EV energy storage device 30. For example, internal or welding battery 131 may be discharged (under instruction from control circuitry 112), routed through circuit 149 to circuit 49 (via a cable). The power from the internal battery 131 can be directed to the EV energy storage device 30, and/or be provided to the power conversion circuitry 10 and/or converter 29 for additional conditioning.

Although FIGS. 2 and 3 have been illustrated without the presence of converters 29, 129, both EV energy systems 50A and 50B can employ converters 29, 129 (and/or other conversion technologies), thereby enabling bidirectional power transfer.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine-readable storage media and to exclude propagating signals.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding power system, comprising:
   a power interface configured to receive input power from an electric vehicle battery according to a vehicle-to-grid or a vehicle-to-everything protocol;
   power conversion circuitry to condition the input power to output power for one or more welding devices; and
   control circuitry configured to:
      receive electric vehicle battery power data;
      compare the electric vehicle battery power data to one or more output power requirements of the one or more welding devices; and
      control the power conversion circuitry to condition the output power to the one or more welding devices in response to the electric vehicle battery power data meeting or exceeding the output power requirements of the one or more welding devices.
Clause 2. The welding power system of clause 1, wherein the control circuitry comprises an interface circuit configured to receive and transmit data and power to and from the electric vehicle battery or a control circuit of an electric vehicle in accordance with the vehicle-to-grid or the vehicle-to-everything protocol.
Clause 3. The welding power system of clause 2, further comprising a welding energy storage device, the power conversion circuitry configured to condition the input power to charge the welding energy storage device.
Clause 4. The welding power system of clause 3, wherein the interface circuit is further configured to transmit power from the welding energy storage device to charge the electric vehicle battery or to power one or more electric vehicle systems.
Clause 5. The welding power system of clause 2, wherein the interface circuit is configured to receive and transmit data to and from the electric vehicle via wired or wireless communications.
Clause 6. The welding power system of clause 1, wherein the welding power system is electrically connected to the electric vehicle via a power cable comprising an electric vehicle receptacle adapter.
Clause 7. The welding power system of clause 6, wherein the electric vehicle receptacle adapter comprises a J-1772 plug.
Clause 8. The welding power system of clause 1, wherein the power conversion circuitry comprises one or more switched-mode power supplies.
Clause 9. The welding power system of clause 1, wherein the welding power system is incorporated in the electric vehicle.
Clause 10. The welding power system of clause 1, wherein the one or more welding devices comprises one or more of a welding torch, a plasma cutting torch, a wire feeder, or a battery charger.
Clause 11. The welding power system of clause 1, wherein the one or more output power requirements of the one or more welding devices correspond to one or more of a predetermined threshold current magnitude or a predetermined threshold power magnitude based in part on a type of the one or more welding devices.
Clause 12. The welding power system of clause 11, wherein the control circuitry is further configured to determine the predetermined threshold current or the predetermined threshold power magnitudes as a percentage above or below the one or more supply power levels, or a magnitude above or below the one or more supply power levels.
Clause 13. A welding power system, comprising:
   a power interface configured to receive input power from and deliver output power to an electric vehicle battery;
   power conversion circuitry to condition the input power to output power for one or more welding devices; and
   control circuitry configured to:
      receive electric vehicle battery power data;
      compare the electric vehicle battery power data to one or more output power requirements of the one or more welding devices; and
      control the power conversion circuitry to condition the output power to the one or more welding devices in response to the electric vehicle battery power data meeting or exceeding the output power requirements of the one or more welding devices.
Clause 14. The welding power system of clause 13, wherein the power interface is configured to receive input power from and deliver output power to an electric vehicle battery according to a vehicle-to-grid or a vehicle-to-everything protocol.
Clause 15. The welding power system of clause 13, wherein the power conversion circuitry is configured to condition DC power from the electric vehicle battery to DC welding power.
Clause 16. The welding power system of clause 13, wherein the power conversion circuitry is configured to condition DC power from the electric vehicle battery to DC power to charge a welding battery.
Clause 17. The welding power system of clause 13, further comprising a welding battery, wherein the power conversion circuitry is configured to condition DC power from the welding battery to DC power for the electric vehicle battery.
Clause 18. The welding power system of clause 13, wherein the power conversion circuitry comprises one or more boost/buck converters.
Clause 19. The welding power system of clause 13, wherein the welding power system is incorporated in an electric vehicle housing the electric vehicle battery.
Clause 20. The welding power system of clause 13, wherein the welding power system is remote from an electric vehicle housing the electric vehicle battery, the welding power system further comprising an adapter to allow a weld cable to connect the welding power system to the electrical vehicle battery.

## Claims

1. A welding power system, comprising:
a power interface configured to receive input power from an electric vehicle battery according to a vehicle-to-grid or a vehicle-to-everything protocol;
power conversion circuitry to condition the input power to output power for one or more welding devices; and
control circuitry configured to:
receive electric vehicle battery power data;
compare the electric vehicle battery power data to one or more output power requirements of the one or more welding devices; and
control the power conversion circuitry to condition the output power to the one or more welding devices in response to the electric vehicle battery power data meeting or exceeding the output power requirements of the one or more welding devices.

2. The welding power system of claim 1, wherein the control circuitry comprises an interface circuit configured to receive and transmit data and power to and from the electric vehicle battery or a control circuit of an electric vehicle in accordance with the vehicle-to-grid or the vehicle-to-everything protocol.

3. The welding power system of claim 2, further comprising a welding energy storage device, the power conversion circuitry configured to condition the input power to charge the welding energy storage device, and optionally
wherein the interface circuit is further configured to transmit power from the welding energy storage device to charge the electric vehicle battery or to power one or more electric vehicle systems.

4. The welding power system of claim 2, wherein the interface circuit is configured to receive and transmit data to and from the electric vehicle via wired or wireless communications.

5. The welding power system of claim 1, wherein the welding power system is electrically connected to the electric vehicle via a power cable comprising an electric vehicle receptacle adapter, and optionally
wherein the electric vehicle receptacle adapter comprises a J-1772 plug.

6. The welding power system of claim 1, wherein the power conversion circuitry comprises one or more switched-mode power supplies.

7. The welding power system of claim 1, wherein the welding power system is incorporated in the electric vehicle.

8. The welding power system of claim 1, wherein the one or more welding devices comprises one or more of a welding torch, a plasma cutting torch, a wire feeder, or a battery charger.

9. The welding power system of claim 1, wherein the one or more output power requirements of the one or more welding devices correspond to one or more of a predetermined threshold current magnitude or a predetermined threshold power magnitude based in part on a type of the one or more welding devices, and optionally
wherein the control circuitry is further configured to determine the predetermined threshold current or the predetermined threshold power magnitudes as a percentage above or below the one or more supply power levels, or a magnitude above or below the one or more supply power levels.

10. A welding power system, comprising:
a power interface configured to receive input power from and deliver output power to an electric vehicle battery;
power conversion circuitry to condition the input power to output power for one or more welding devices; and
control circuitry configured to:
receive electric vehicle battery power data;
compare the electric vehicle battery power data to one or more output power requirements of the one or more welding devices; and
control the power conversion circuitry to condition the output power to the one or more welding devices in response to the electric vehicle battery power data meeting or exceeding the output power requirements of the one or more welding devices.

11. The welding power system of claim 10, wherein the power interface is configured to receive input power from and deliver output power to an electric vehicle battery according to a vehicle-to-grid or a vehicle-to-everything protocol.

12. The welding power system of claim 10, wherein the power conversion circuitry is configured to condition DC power from the electric vehicle battery to DC welding power, or
wherein the power conversion circuitry is configured to condition DC power from the electric vehicle battery to DC power to charge a welding battery.

13. The welding power system of claim 10, further comprising a welding battery, wherein the power conversion circuitry is configured to condition DC power from the welding battery to DC power for the electric vehicle battery.

14. The welding power system of claim 10, wherein the power conversion circuitry comprises one or more boost/buck converters.

15. The welding power system of claim 10, wherein the welding power system is incorporated in an electric vehicle housing the electric vehicle battery, or
wherein the welding power system is remote from an electric vehicle housing the electric vehicle battery, the welding power system further comprising an adapter to allow a weld cable to connect the welding power system to the electrical vehicle battery.
